# EUROPÄISCHE PATENTSCHRIFT

(11) **EP 0 713 720 B1**
(45) Veröffentlichungstag und Bekanntmachung des Hinweises auf die Patenterteilung: **21.02.2001**
(21) Anmeldenummer: 95116540.6
(22) Anmeldetag: 20.10.1995
(51) Int. Cl.: B01D 36/04, B01D 36/00

(54) **Ölfilter**
Oil filter
Filtre à huile

(30) Priorität: 26.11.1994 DE 4442148
(43) Veröffentlichungstag der Anmeldung: 29.05.1996
(73) Patentinhaber: MAHLE Filtersysteme GmbH, 70376 Stuttgart (DE)
(72) Erfinder: Gebert, Hans, D-74080 Heilbronn-Böckingen (DE)
(74) Vertreter: Patentanwalts-Partnerschaft Rotermund + Pfusch

(56) Entgegenhaltungen:
- EP-A- 0 164 882
- EP-A- 0 171 138
- EP-A- 0 342 308
- EP-A- 0 376 443
- EP-A- 0 394 585
- DE-C- 4 306 431

## Beschreibung

Die Erfindung betrifft ein Ölfilter nach dem Oberbegriff des Patentanspruchs 1.

Ein solches Ölfilter ist bekannt aus der Veröffentlichung Brieden, Thomas; u.a.: Ölfilter Module für Verbrennungsmotoren. In: MTZ Motortechnische Zeitschrift 55, Januar 1994, Seite 68 bis 71.

Die Erfindung beschäftigt sich mit dem Problem, die bekannte Einrichtung möglichst raumsparend auszubilden.

Dieses Problem wird gelöst durch eine Ausgestaltung des gattungsgemäßen Ölfilters mit den kennzeichnenden Merkmalen des Patentanspruchs 1.

Bei der erfindungsgemäßen Integration des Ölabscheiders in das Gehäuse des Ölfilters wird eine hervorragende Raumausnutzung erzielt. Der Innenraum des zylindrischen Ölfilters weist einen Durchmesser und damit auch ein Volumen auf, das für den Zweck der Ableitung des filtrierten Öls überdimensioniert ist, jedoch aufgrund der notwendigen Filterfläche zwangsläufig erforderlich ist. Dieses Volumen kann durch eine Integration des Ölabscheiders in das Ölfilter in einer überraschend wirkungsvollen und vorteilhaften Weise dadurch genutzt werden, daß der Ölabscheider an dem Filterdeckel gelagert ist. Dies vereinfacht in raum- und kostensparender Weise den Aufbau der gattungsmäßigen Einrichtung.

Soweit nach EP-A-0376443 und EP-A-0342308 bereits Ölabscheider in den zentralen Innenraum eines ringförmigen Filterelementes eines Ölfilters eingreifen, handelt es sich um Ölfilter-Entlüftungseinrichtungen, nicht jedoch um Ölabscheider zur Abscheidung von Öltröpfchen aus der Kurbelraumluft eines Verbrennungsmotors.

Bei einem aus EP-A-0164882 bekannten Ölfilter handelt es sich um ein Haupt- und Nebenstromfilter, bei dem innerhalb eines ringförmigen Filterelementes als einer ersten Trennvorrichtung ein Zyklon als eine zweite Trennvorrichtung angebracht ist. Keine der beiden Trenneinrichtungen dieses Ölfilters dienen zur Abscheidung von Öltröpfchen aus Kurbelraumluft eines Verbrennungsmotors.

Bei einer Integration des Ölabscheiders in das Gehäuse des Ölfilters wird auch eine bessere Raumausnutzung erzielt. Der Innenraum eines zylindrischen Ölfilters weist einen Durchmesser und damit auch ein Volumen auf, das für den Zweck der Ableitung des filtrierten Öls überdimensioniert ist, jedoch aufgrund der notwendigen Filterfläche zwangsläufig erforderlich ist. Dieses Volumen kann durch Integration eines Ölabscheiders in ein Ölfilter genutzt werden.

Die Erfindung wird im folgenden anhand von zwei Ausführungsbeispielen beschrieben.

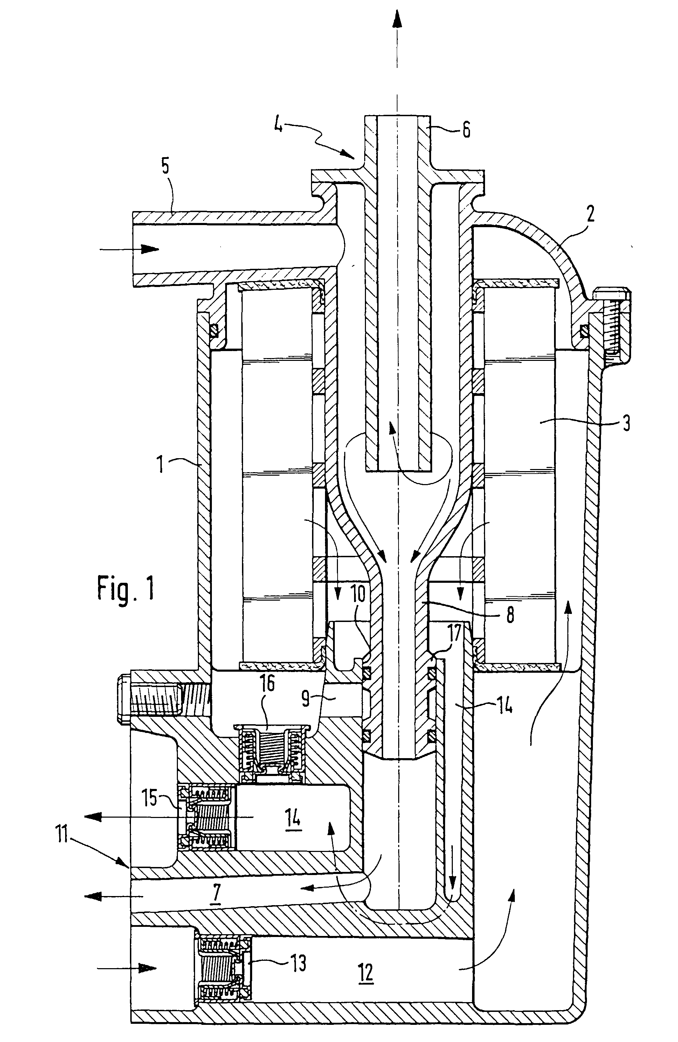

Es zeigen
- Figur 1: ein Ölfilter mit integriertem Ölabscheider im Schnitt,
- Figur 2: eine alternative Ausführung eines Ölfilters in gleicher Darstellungsweise.

Ein Ölfilter besitzt ein Filtergehäuse, das aus einem Filtertopf 1 und einem Filterdeckel 2 besteht. In dem Filtergehäuse befindet sich ein von außen nach innen durchströmtes Filterelement 3. Über einen Stutzen 5 wird dem Abscheider 4 tangential ölbelastete Kurbelgehäuseluft zugeführt, wobei sich feine Öltropfen infolge der Zentrifugalkraft an der Innenwand des Abscheiders 4 abscheiden. Die gereinigte Luft wird über einen zentralen Stutzen 6 wieder dem Motor zugeführt.

Das abgeschiedene Öl wird über ein mit dem Filterdeckel 2 verbundenes zentrales Rohr 8 einem im Filtergehäuse unten liegenden, drucklosen Ablauf 7 zu einer nicht dargestellten Ölwanne geführt. Das untere Ende des Rohres 8 ist als außendichtender Stopfen 17 ausgebildet, der in eine in den Ablauf 7 mündende Zentralbohrung 10 eingreift.

Bei einem Wechsel des Filterelementes 3 wird der Stopfen 17 beim Abziehen des Filterdeckels 2 aus seinem Sitz gezogen und das im Filtergehäuse vorhandene Öl kann rohseitig über die Bohrung 9 und reinseitig über die Zentralbohrung 10 in den Ablauf 7 ablaufen.

Der Abscheider 4 und das Filterelement 3 liegen gleichachsig ineinander.

Das Filtergehäuse weist einen Flansch 11 auf, mit dem es an einem nicht dargestellten Kurbelgehäuse angeschraubt werden kann. Über eine Leitung 12 wird Öl dem Filterelement 3 zugeführt. Das gereinigte Öl wird über eine Leitung 14 abgeführt. Mit Ventilen 13 und 15 wird ein Leerlaufen des Filtergehäuses bei stehendem Motor vermieden. Bei stark verschmutztem Filterelement 3 wird infolge des höheren Differenzdrucks ein Ventil 16 geöffnet, das dem Ölstrom eine Umgehung des Filterelementes 3 gestattet.

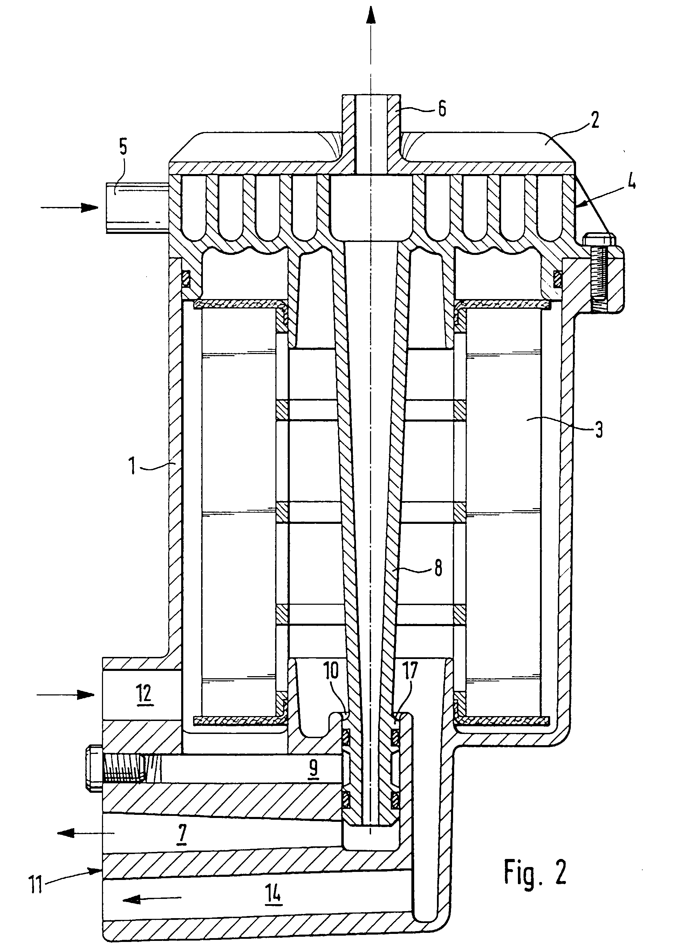

Bei der Ausführung nach Fig. 2 tritt die aus dem Kurbelgehäuse kommende Abluft radial außen in einen horizontal spiralförmig verlaufenden Abscheidekanal ein, der vertikal oberhalb des Filterelementes 3 liegt und zentral in das abführende Rohr 8 einmündet. Dieser Abscheidekanal ist zusammen mit dem Rohr 8 in den Filterdeckel 2 integriert.

## Patentansprüche

1. Ölfilter für Verbrennungsmotoren mit Kurbelraumentlüftung, mit einem Filtergehäuse, bestehend aus einem Filtertopf (1) und einem Filterdeckel (2), mit einem ersten Zulauf (12), einem ersten Ablauf (14), einem ringförmigen Filterelement (3) für zu filterndes Öl als ein erstes Strömungsmittel, bei dem das Gehäuse des Ölfilters mit dem Gehäuse eines Ölabscheiders für aus der Kurbelraumluft als ein zweites Strömungsmittel abzuscheidendes Öl, für die Kurbelraumentlüftung, mit einem zweiten Zulauf (5), einem zweiten Ablauf (7) kombiniert ist, wobei die beiden Strömungsmittel das Ölfilter und den Ölabscheider (4) getrennt voneinander durchströmen,
**dadurch gekennzeichnet,**
daß der Ölabscheider (4) innerhalb des Gehäuses des Ölfilters liegt, den freien Innenraum des ringförmigen Filterelementes (3) durchgreift und im Filterdeckel (2) gelagert ist.

2. Ölfilter nach Anspruch 1,
**dadurch gekennzeichnet**,
daß der Ölabscheider (4) ein Zyklon- oder Zentrifugalabscheider ist und daß die Mittelachsen von dem Filterelement (3) und dem Ölabscheider (4) jeweils vertikal ausgerichtet fluchten.

3. Ölfilter nach Anspruch 1 oder 2
**dadurch gekennzeichnet**,
daß der Zentrifugalabscheider einen oberhalb des Filterelementes (3) liegenden spiralförmigen Abscheidekanal besitzt.

4. Ölfilter nach Anspruch 3,
**dadurch gekennzeichnet**,
daß der Ölabscheider (4) in den Filterdeckel (2) vollständig integriert ist.

5. Ölfilter nach einem der vorhergehenden Ansprüche mit einem drucklosen Ablauf (7) zur Ölwanne, der bei geschlossenem Filterdeckel (2) verschlossen ist und bei geöffnetem Filterdeckel (2) geöffnet ist, damit beim Filterwechsel das Filtergehäuse roh- und reinseitig leerlaufen kann,
**dadurch gekennzeichnet**,
daß der Ölablauf des Abscheiders (4) mit dem drucklosen Ablauf (7) des Ölfilters verbunden ist und bei verschlossenem Ölablauf den Verschluß bildet.

6. Ölfilter nach Anspruch 5,
**dadurch gekennzeichnet**,
daß der Ölablauf des Abscheiders (4) in Form eines an den Abscheider (4) angeformten Fallrohres (8) mit angeformtem Hohl-Stopfen (17) ausgebildet ist, wobei der Stopfen bei montiertem Filterdeckel (2) den drucklosen Ölablauf (7) roh- und reinseitig sperrt und ihn bei demontiertem Filterdeckel (2) roh- und reinseitig freigibt.

7. Ölfilter nach einem der vorhergehenden Ansprüche,
**dadurch gekennzeichnet**,
daß die Kurbelgehäuseluft dem Ölabscheider (4) über eine Leitung innerhalb des Filtergehäuses zugeführt wird.

8. Ölfilter nach einem der vorhergehenden Ansprüche,
**dadurch gekennzeichnet**,
daß der Abscheider (4) ein Ventil zur Regelung des Kurbelgehäusedrucks aufweist.

## Claims

1. Oil filter for internal-combustion engines with crank-case breather with a filter housing consisting of a filter pot (1) and a filter cover (2), with a first inlet (12), a first outlet (14), an annular filter element (3) for oil to be filtered as a first flow medium, in which the housing of the oil filter is combined with the housing of an oil separator for oil to be separated from the crank-case air as a second flow means for the crank-case breather, with a second inlet (5), a second outlet (7), the two flow media flowing though the oil filter and the oil separator (4) separately from one another, characterised in that the oil separator (4) is located inside the housing of the oil filter, reaches through the uncovered interior of the annular filter element (3) and is located in the filter cover (2).

2. Oil filter according to claim 1, characterised in that the oil separator (4) is a cyclone or centrifugal separator, and in that the central axes of the filter element (3) and the oil separator (4) are vertically aligned in each case.

3. Oil filter according to claim 1 or 2, characterised in that the centrifugal separator has a spiral-shaped separating channel located above the filter element (3).

4. Oil filter according to claim 3, characterised in that the oil separator (4) is completely integrated in the filter cover (2).

5. Oil filter according to one of the preceding claims with an unpressurised outlet (7) to the oil sump, which outlet is closed when the filter cover (2) is closed and is opened when the filter cover (2) is open, so the filter housing can drain off on the crude side and on the pure side in the event of a filter change, characterised in that the oil outlet of the separator (4) is connected to the unpressurised outlet (7) of the oil filter and forms the seal when the oil outlet is closed.

6. Oil filter according to claim 5, characterised in that the oil outlet of the separator (4) is designed in the form of a down pipe (8) integral with the separator (4) with integral cap plugs (17), the plugs blocking the unpressurised oil outlet (7) at the crude side and pure side when the filter cover (2) is in place and unblocking it at the crude side and pure side when the filter cover (2) is removed.

7. Oil filter according to one of the preceding claims, characterised in that the crank-case air is supplied to the oil separator (4) via a line inside the filter housing.

8. Oil filter according to one of the preceding claims, characterised in that the separator (4) has a valve for regulating the crank-case pressure.

## Revendications

1. Filtre à huile pour moteurs à combustion interne à évacuation d'air du carter, comportant un boîtier constitué d'un pot (1) et d'un couvercle (2), une première entrée (12), une première sortie (14), un élément filtrant annulaire (3) pour l'huile à filtrer comme premier fluide d'écoulement, le boîtier du filtre à huile étant combiné avec le corps d'un séparateur d'huile pour l'huile à séparer comme deuxième fluide d'écoulement de l'air du carter pour l'évacuation d'air du carter, une deuxième entrée (5), une deuxième sortie (7), les deux fluides d'écoulement traversant séparément l'un de l'autre le filtre à huile et le séparateur d'huile (4), caractérisé par le fait que le séparateur d'huile (4) est situé à l'intérieur du boîtier du filtre à huile, traverse l'espace libre intérieur de l'élément filtrant annulaire (3) et est monté dans le couvercle (2) du filtre.

2. Filtre à huile selon la revendication 1, caractérisé par le fait que le séparateur d'huile (4) est un séparateur cyclone ou centrifuge et que les axes de l'élément filtrant (3) et du séparateur d'huile (4) sont verticaux et confondus.

3. Filtre à huile selon l'une des revendications 1 et 2, caractérisé par le fait que le séparateur centrifuge possède un canal de séparation en spirale situé au-dessus de l'élément filtrant (3).

4. Filtre à huile selon la revendication 3, caractérisé par le fait que le séparateur d'huile (4) est entièrement intégré dans le couvercle (2) du filtre.

5. Filtre à huile selon l'une des revendications précédentes, comportant une sortie sans pression (7) vers le carter d'huile qui est fermée lorsque le couvercle (2) du filtre est fermé et ouverte lorsque le couvercle (2) du filtre est ouvert afin qu'au changement de filtre, le boîtier du filtre puisse se vider du côté brut et du côté pur, caractérisé par le fait que la sortie d'huile du séparateur (4) communique avec la sortie sans pression (7) du filtre à huile et forme la fermeture lorsque la sortie d'huile est fermée.

6. Filtre à huile selon la revendication 5, caractérisé par le fait que la sortie d'huile du séparateur (4) est formée par un tuyau de descente (8) formé sur le séparateur (4) et sur lequel est formé un bouchon creux (17), le bouchon obturant la sortie d'huile sans pression (7) du côté brut et du côté pur lorsque le couvercle (2) du filtre est monté et la dégageant du côté brut et du côté pur lorsque le couvercle (12) du filtre est démonté.

7. Filtre à huile selon l'une des revendications précédentes, caractérisé par le fait que l'air du carter est amené au séparateur d'huile (4) par un conduite située à l'intérieur du boîtier du filtre.

8. Filtre à huile selon l'une des revendications précédentes, caractérisé par le fait que le séparateur (4) comporte une soupape de régulation de la pression dans le carter.
